# EUROPEAN PATENT APPLICATION

(11) **EP 4 131 468 A1**
(43) Date of publication of application: **08.02.2023**
(21) Application number: 21775876.2
(22) Date of filing: 08.03.2021
(51) Int. Cl.: H01M 4/131, H01M 4/36, H01M 4/485, H01M 4/505, H01M 4/525, H01M 4/62, H01M 10/0562, H01M 10/0565

(54) **ACTIVE MATERIAL, ELECTRODE MIXTURE CONTAINING SAID ACTIVE MATERIAL, AND BATTERY**

(30) Priority: 24.03.2020 JP 2020053392
(71) Applicant: Mitsui Mining & Smelting Co., Ltd., Shinagawa-ku Tokyo 141-8584 (JP)
(72) Inventor: OMURA, Jun, Ageo-shi, Saitama 362-0021 (JP); KONDO, Akihiro, Ageo-shi, Saitama 362-0021 (JP); UESUGI, Hideo, Ageo-shi, Saitama 362-0021 (JP)
(74) Representative: Novagraaf Technologies
(86) International application number: PCT/JP2021/009062
(87) International publication number: WO 2021/192966

(57) **Abstract**

An active material includes: a compound A containing elemental Li, an element M, and elemental O, where the element M represents one or more elements selected from elemental Ni, elemental Co, and elemental Mn; and a compound B containing elemental Li, elemental Nb, and elemental O; wherein, in a Raman spectrum obtained by Raman spectroscopy on the active material, the ratio between S_{PA} and S_{PB}, S_{PB}/S_{PA}, satisfies 0 < S_{PB}/S_{PA} ≤ 1.2, where S_{PA} represents the area of a peak assigned to the compound A in a range of 540 to 650 cm⁻¹, and S_{PB} represents the area of a peak assigned to the compound B.

## Description

### Technical Field

The present invention relates to an active material for a battery. Also, the present invention relates to an electrode material mixture and a battery containing the active material.

### Background Art

Lithium ion secondary batteries are widely used as power sources for portable electronic devices such as laptop computers and cellular phones because of their high energy density and ease of size and weight reductions. In addition, high-power, high-capacity lithium ion secondary batteries for use in electric automobiles, hybrid electric automobiles, and the like have recently been under development.

Currently, many lithium ion secondary batteries contain electrolytic solutions that contain flammable organic solvents. For this reason, there is a risk that, if a battery becomes hot due to a short circuit or the like, the electrolytic solution will ignite. By contrast, solid-state batteries, which contain solid electrolytes instead of electrolytic solutions and do not contain flammable organic solvents, reduce the risk of ignition, and it is therefore hoped that solid-state batteries will be put to practical use as safe batteries with high energy densities.

As a type of solid electrolyte for solid-state batteries, a sulfide solid electrolyte has been researched. However, a solid-state battery containing a sulfide solid electrolyte has the following problem: when the battery is charged and discharged, an interface resistance between an electrode active material and the sulfide solid electrolyte increases, and transportation of lithium ions is restricted. It is believed that the reason for this is that a resistive layer is formed at an interface between the electrode active material and the sulfide solid electrolyte due to the reaction therebetween. For example, Patent Literature 1 discloses an attempt to solve this problem, and specifically discloses suppressing an increase in the interface resistance by coating the surface of a positive electrode active material with a specific compound.

### Citation List

### Patent Literature

Patent Literature 1: US 2018/219229A1

### Summary of Invention

Various technologies have been proposed for active materials. Meanwhile, regarding the current demand for further improvements in battery performance, there is a need for an active material capable of reducing the interface resistance between the active material and a solid electrolyte such as a sulfide solid electrolyte.

Under the above-described circumstances, it is a main object of the present invention to provide an active material capable of reducing interface resistance between the active material and a solid electrolyte to thereby improve battery performance.

The present invention provides an active material including:
a compound A containing elemental lithium (Li), an element M, and elemental oxygen (O), where the element M represents one or more elements selected from elemental nickel (Ni), elemental cobalt (Co), and elemental manganese (Mn); and
a compound B containing elemental lithium (Li), elemental niobium (Nb), and elemental oxygen (O),
wherein, in a Raman spectrum obtained by Raman spectroscopy on the active material, a ratio between S_{PA} and S_{PB}, S_{PB}/S_{PA}, satisfies 0 < S_{PB}/S_{PA} ≤ 1.2, where S_{PA} represents an area of a peak assigned to the compound A in a range of 540 to 650 cm⁻¹, and S_{PB} represents an area of a peak assigned to the compound B.

Also, the present invention provides an electrode material mixture containing the above-described active material and a solid electrolyte.

Furthermore, the present invention provides a battery including a positive electrode layer containing a positive electrode active material, a negative electrode layer containing a negative electrode active material, and a solid electrolyte layer containing a solid electrolyte, wherein the positive electrode active material is the above-described active material.

### Brief Description of Drawings

[Fig. 1] Fig. 1 is a graph showing a Raman spectrum of the active material obtained in Example 4 and the results of peak separation thereof.
[Fig. 2] Figs. 2(a) to 2(c) are scanning transmission electron microscope images of the active materials obtained in Examples 2 to 4, respectively.
[Fig. 3] Fig. 3 is a graph showing Raman spectra of the active materials obtained in Examples 1 to 5 and Comparative Example 1.

### Description of Embodiments

Hereinafter, the present invention will be described based on preferred embodiments thereof. The present invention relates to an active material for use in a battery, and an electrode material mixture and a battery containing the active material. Hereinafter, these will be described individually.

### A. Active Material

The active material of the present invention contains two specific compounds, the compound A and the compound B. In addition to the compounds A and B, the active material of the present invention may also contain other compounds, if necessary.

The individual compounds will be described below.

### A-1. Compound A

The compound A contains elemental lithium (Li), an element M (the element M represents one or more elements selected from elemental nickel (Ni), elemental cobalt (Co), and elemental manganese (Mn)), and elemental oxygen (O). That is to say, the compound A is a lithium-transition metal complex oxide. Examples of the lithium-transition metal complex oxide used as the compound A include, but are not limited to, one of a lithium-containing complex oxide having a layered rock salt-type structure and represented by LiMO₂, where M is as defined above, and a lithium-containing complex oxide having a spinel-type structure and represented by LiM₂O₄, where M is as defined above, and a combination of both.

In particular, the compound A is preferably the aforementioned lithium-containing complex oxide having a spinel-type structure. In the following description, a lithium-containing complex oxide having a spinel-type structure may be referred to simply as "spinel-type complex oxide". In the case where the active material of the present invention containing such a compound A is used as a positive electrode active material, the positive electrode active material has a working potential of at least 4.5 V against the potential of metal Li as a reference potential. The wording "having a working potential of at least 4.5 V against the potential of metal Li as a reference potential" does not necessarily mean "having only a working potential of at least 4.5 V as a plateau region", and also encompasses "partially having a working potential of at least 4.5 V". Accordingly, the present invention is not limited to a positive electrode active material consisting of a 5 V class positive electrode active material that has a working potential of at least 4.5 V as a plateau region. For example, the active material of the present invention may also include a positive electrode active material that has a working potential of less than 4.5 V as a plateau region.

In the case where the compound A is a spinel-type complex oxide, the compound A preferably contains at least elemental Mn, and more preferably contains elemental Li, elemental Mn, elemental O, and one or more other elements. The "one or more other elements" here is preferably an elemental metal M1 selected from the group consisting of elemental Ni and elemental Co.

In the case where the compound A is a spinel-type complex oxide, the compound A also preferably contains elemental Li, elemental Mn, elemental O, and two or more other elements. At least one element of the "two or more other elements" is preferably an elemental metal M1 selected from the group consisting of Ni and Co, and the other element(s) is preferably one or more elemental metals M2 selected from the group consisting of Na, Mg, Al, P, K, Ca, Ti, V, Cr, Fe, Co, Cu, Ga, Y, Zr, Nb, Mo, In, Ta, W, Re, and Ce.

A particularly preferred example of the compound A is a spinel-type lithium manganese-containing complex oxide having a crystal structure in which a plurality of the Mn sites in LiMn₂O_{4-δ} are replaced by Li, the elemental metal M1, and the other elemental metal M2.

The elemental metal M1 is a substituent element that mainly contributes to obtaining a working potential of at least 4.5 V against the potential of metal Li as the reference potential, and the elemental metal M1 preferably contains at least one element of Ni and Co, as described above.

On the other hand, the elemental metal M2 is a substituent element that mainly contributes to stabilization of the crystal structure to thereby improve the characteristics. Examples of the elemental metal M2 serving as a substituent element that contributes to improvement in the capacity retention include Na, Mg, Al, P, K, Ca, Ti, V, Cr, Fe, Co, Cu, Ga, Y, Zr, Nb, Mo, In, Ta, W, Re, and Ce, and among these elements, Na, Mg, Al, P, K, Ca, Ti, Cr, Fe, Co, Cu, Ga, Y, Zr, Nb, Mo, Ta, and W are preferable. As the elemental metal M2, the above-described elements may be used singly, or in combinations of two or more thereof. The elemental metal M2 preferably contains at least one of the above-described elements, and may also contain an elemental metal other than the above-described elements. The elemental metal M2 contained in the structure is a different elemental species than the elemental metal M1.

An exemplary composition of the compound A is a composition that contains a spinel-type lithium manganese-containing complex oxide represented by the formula (1): Liₓ(M1_{y}M2_{z}Mn_{3-x-y-z})O_{4-δ}. The elemental metal M1 and the elemental metal M2 in the formula (1) are as described above.

In the formula (1) above, "x" is preferably from 1.00 to 1.20, more preferably at least 1.01 or at most 1.10, and even more preferably at least 1.02 or at most 1.08. "y" indicates the amount of the elemental metal M1 contained and is preferably from 0.20 to 1.20, more preferably at least 0.30 or at most 1.10, and even more preferably at least 0.35 or at most 1.05. "z" indicates the amount of the elemental metal M2 contained and is preferably from 0.001 to 0.400, more preferably at least 0.002 or at most 0.400, even more preferably at least 0.005 or at most 0.30, and yet even more preferably at least 0.10. In particular, when z is at least 0.10, the cycle characteristics can be more effectively improved.

Another example of the composition of the compound A is a spinel-type lithium manganese-containing complex oxide represented by the formula (2): Liₓ(Ni_{y}M3_{z}Mn_{3-x-y-z})O₄₋₈. In the formula (2), "x" is preferably from 1.00 to 1.20, more preferably at least 1.01 or at most 1.10, and even more preferably at least 1.02 or at most 1.08. In the formula (2), "y" is preferably from 0.20 to 0.70, more preferably at least 0.30 or at most 0.60, and even more preferably at least 0.35 or at most 0.55.

In the formula (2) above, examples of an elemental metal M3 include Na, Mg, Al, P, K, Ca, Ti, V, Cr, Fe, Co, Cu, Ga, Y, Zr, Nb, Mo, In, Ta, W, Re, and Ce, and among these elements, Na, Mg, Al, P, K, Ca, Ti, Cr, Fe, Co, Cu, Ga, Y, Zr, Nb, Mo, Ta, and W are preferable. As the elemental metal M3, the above-described elements may be used singly, or in combinations of two or more thereof. "z" indicates the mole ratio of the elemental metal M3 and is preferably greater than 0 and at most 0.5, more preferably greater than 0.01 or at most 0.45, even more preferably at least 0.05 or at most 0.40, and yet even more preferably at least 0.10 or at most 0.35. In particular, when z is at least 0.10, the cycle characteristics can be more effectively improved.

"4-δ" in the formulae (1) and (2) indicates that an oxygen vacancy may be included. Moreover, a plurality of oxygen sites may be replaced by fluorine or another element. In this case, δ is preferably at least 0 or at most 0.2, more preferably at most 0.1, and even more preferably at most 0.05.

For the compound A, fitting to a crystal structure model of a cubic crystal with the space group Fd-3m (Origin Choice 2) can be performed, for example, and at that time, if the ranges of Rwp and S, which indicate the degree of agreement between the observed intensity and the calculated intensity, satisfy Rwp < 10 or S < 2.5, it can be determined that the compound A has a spinel-type structure.

### A-2. Compound B

The compound B included in the active material of the present invention contains elemental lithium (Li), elemental niobium (Nb), and elemental oxygen (O). The elemental composition of the compound B can be represented by LiₓNbO_{y}, for example. In this formula, x and y can be any values within ranges according to the valences of the respective elements. Among others, a composition in which Li is contained in an amount of more than 1 mol per mole of Nb (x > 1) is particularly preferable. In this way, the formation of a compound of Nb and O can be suppressed, and the interface resistance between the active material and a solid electrolyte can thus be effectively reduced. Specifically, the value of x is preferably 1 < x ≤ 2, and the value of y is preferably 3 ≤ y ≤ 8.

In order to satisfy x > 1 in the case where the compound B is represented by LiₓNbO_{y}, the amount of the lithium starting material used relative to that of the niobium starting material used may be greater than the amount in the stoichiometric compositional ratio of the composition that is expected to be produced, for example, LiNbOs. At this time, simply adding lithium in an excess amount causes lithium carbonate to be formed on the surface of the active material due to the excess lithium, and the lithium carbonate thus formed tends to provide a resistance to thereby impair the rate characteristics and the cycle characteristics. For this reason, it is preferable to adjust the amounts of the niobium starting material and the lithium starting material added so as to obtain LiₓNbO_{y} having a predetermined composition, with consideration given to the formation of lithium carbonate, which is an undesirable compound.

The content of the compound B in the active material is preferably from 0.01 to 20 mass%, more preferably from 0.1 to 15 mass%, and even more preferably from 0.5 to 10 mass%, in terms of elemental niobium (Nb) contained in the compound B. When the amount of elemental niobium (Nb) contained in the active material is within this range, the formation of a high resistance region between the active material and a solid electrolyte can be effectively suppressed, and the interface resistance between the active material and the solid electrolyte can thus be reduced, as will be described later. The amount of elemental niobium (Nb) contained in the active material can be measured by ICP atomic emission spectroscopy on a solution containing the active material dissolved therein.

### A-3. Raman Spectrum

When the active material of the present invention containing the above-described compounds A and B is analyzed by Raman spectroscopy, a Raman spectrum peak assigned to the compound A and that to the compound B are exhibited.

More specifically, in a Raman spectrum of the compound A obtained by Raman spectroscopy, one or more peaks assigned to the compound A are exhibited in a wavenumber range of the Raman shift of 540 to 650 cm⁻¹, depending on the composition of the compound A. Peaks in this wavenumber range are exhibited regardless of whether the compound A has a layered rock salt-type structure or a spinel-type structure. The peaks in this wavenumber range include both a peak that is derived from vibrations between a transition element and elemental oxygen, in a one-to-one relationship, in the compound A (e.g., peaks assigned to MnO, CoO, and NiO) and a peak that is derived from overall vibrations between a transition element and all the elemental oxygen atoms that are located around the transition element (e.g., a peak assigned to MnOe).

On the other hand, one or more peaks assigned to the compound B are exhibited in a range of 850 to 950 cm⁻¹, for example, depending on the composition of the compound B. For example, "JOURNAL OF PHYSICS: CONDENSED MATTER, J. Phys.: Condens. Matter 25 (2013) 205901 (8pp) 'Identification of LiNbOs, LiNbsOs and Li₃NbO₄ phases in thin films synthesized with different deposition techniques by means of XRD and Raman spectroscopy‴ discloses Raman spectra of Li₃NbO₄, LiNbOs, and LiNbsOs, but none of these shows the peak position(s) and the peak area ratio that are specified in the present invention. Therefore, it can be said from the Raman spectrum specified in the present invention that the compound B has a novel structure.

In the active material of the present invention, the ratio between S_{PA} and S_{PB}, S_{PB}/S_{PA}, preferably satisfies 0 < S_{PB}/S_{PA} ≤ 1.2, wherein S_{PA} is represents the area of a peak assigned to the compound A in the above-described range of 540 to 650 cm⁻¹ and S_{PB} represents the area of a peak assigned to the compound B. Since a Raman spectrum is obtained by analyzing the Raman scattering of incident light, the Raman spectrum obtained for the active material of the present invention reflects the state of the surface (surface layer, not the outermost surface) of the active material. Whether or not the compound B is present in the surface layer can be checked using a scanning transmission electron microscope (hereinafter also referred to as "STEM") or the like. A value of S_{PB}/S_{PA} (hereinafter, this value will also be referred to as "Raman spectral ratio") within a specific range means that the ratio between the compound A and the compound B present in the surface layer of the active material is in a specific range. As a result of studies, the inventors of the present invention have found that, when the active material of the present invention in which the compound A and the compound B are present in the surface layer in a specific Raman spectral ratio, and a solid electrolyte, for example, a sulfide solid electrolyte are in contact with each other, the formation of a region with high resistance to transportation of lithium ions at the interface between the active material and the solid electrolyte is suppressed. Thus, the interface resistance between the active material and the solid electrolyte is reduced, and the transportation of lithium ions is smooth so that the capacity of a battery improves. This advantage is even more remarkable when the compound A included in the active material has a 5 V class spinel-type structure.

In view of further suppressing the formation of the above-described high resistance region to thereby further improve the battery capacity, the Raman spectral ratio is more preferably from 0.01 to 0.50, and even more preferably from 0.02 to 0.30.

As described above, the peak area S_{PA} for calculating the Raman spectral ratio is calculated from a Raman spectrum peak that is assigned to the compound A in a wavenumber range of 540 to 650 cm⁻¹. A plurality of peaks may be exhibited in this wavenumber range. In such cases, a mathematical operation is performed to separate overlapping peaks into individual peaks, and the sum total of the areas of the separated peaks is used as the peak area S_{PA}. In this case, peaks whose peak tops are within the above-described wavenumber range, out of the separated peaks, are used to obtain the peak area.

On the other hand, in general, only one peak is exhibited in the wavenumber range for obtaining the area S_{PB} of a peak assigned to the compound B in many cases. However, if two or more overlapping peaks are exhibited, an operation for separating the peaks is performed, and the sum total of the areas of the separated peaks is used as the peak area S_{PB}, as is the case with the peak area S_{PA}.

In the active material of the present invention, the compound A and the compound B may be in any state without limitation, as long as the Raman spectral ratio fall within the above-described range. For example, particles of the compound A and particles of the compound B may be present in a mixed state in the active material. Alternatively, particles of the compound B may be present on the surface of particles of the compound A. In particular, the active material preferably has a structure in which the compound B is present on at least a portion of the surface of a core containing the compound A, because the Raman spectral ratio can be easily adjusted so as to fall within the above-described range.

When the active material has a structure in which the compound B is present on at least a portion of the surface of the core containing the compound A, the compound B may uniformly coat the entire surface of the core, or may partly coat the surface of the core so that the surface of the core is partly exposed. In other words, the compound B preferably coats the surface of the core containing the compound A to an extent that the effect of the present invention can be obtained. When the compound B is present on the surface of the core containing the compound A with the surface of the core partly exposed, the compound B may be present such that "island regions" made of the compound B are scattered on the surface of the core containing the compound A as the "sea region".

The shape and size of the core may be any shape and size that can be used for an active material, and there are no particular limitations thereon as long as they are applicable to a battery. The core is preferably a particulate shape, for example. The thickness of the coating can be tailored to the material of the coating, and is preferably such that the effect of the present invention can be exhibited. The thickness of the coating can be from 1 nm to 1 µm, for example. The thickness of the coating can be measured in an observation image of, for example, a high-angle scattering annular dark-field scanning transmission electron microscope (HAADF-STEM), and can be obtained as an average value (n ≥ 10). The ratio of the coating to the surface of the core, that is, the coverage by coating can be appropriately adjusted according to the material of the coating, and is preferably such that the effect of the present invention can be exhibited. For example, the coverage is preferably 30% or greater, more preferably 50% or greater, even more preferably 80% or greater, and yet even more preferably 90% or greater. The coverage can be determined using, for example, X-ray photoelectron spectroscopy (XPS).

When the active material of the present invention has the core and the coating, the core preferably contains the compound A, and the coating preferably contains the compound B. The percentage of the compound A contained in the core may be, for example, 70 mass% or greater, 80 mass% or greater, or 90 mass% or greater, based on all the compound A contained in the active material. On the other hand, the percentage of the compound B contained in the coating may be, for example, 70 mass% or greater, 80 mass% or greater, or 90 mass% or greater, based on all the compound B contained in the active material.

In the present invention, the core preferably includes mainly the compound A. The wording "include mainly" means that the content is, for example, 50 mass% or greater, more preferably 70 mass% or greater, and even more preferably 90 mass% or greater.

The content of the compound B in the coating is preferably such that, in a Raman spectrum obtained by analyzing the active material by Raman spectroscopy, the ratio between S_{PA} and S_{PB}, S_{PB}/S_{PA}, satisfies 0 < S_{PB}/S_{PA} ≤ 1.2 as described hereinabove, where S_{PA} represents the area of a peak assigned to the compound A in a range of 540 to 650 cm⁻¹, and S_{PB} represents the area of a peak assigned to the compound B.

Whether or not the compound B is present on the surface of the core containing the compound A can be checked in the Raman spectrum described above, and can also be checked using element mapping, X-ray photoelectron spectroscopy (XPS), STEM, a combination of STEM and energy dispersive X-ray spectroscopy (EDS), Auger electron spectroscopy, or the like.

Regardless of the state in which the compound A and the compound B are present, the 50th percentile of the particle size, D₅₀, of the active material in the volume-weighed particle size distribution as determined by laser diffraction scattering particle size distribution analysis is, for example, preferably 20 µm or less, more preferably less than 15 µm, even more preferably greater than 1 µm and less than 10 µm, and yet even more preferably greater than 2 µm and 8 µm or less. When a positive electrode material mixture, for example, includes an active material having a D₅₀ of 20 µm or less, good contact with a solid electrolyte in the positive electrode material mixture can be achieved, and the lithium ion utilization rate in the active material can be increased. When the D₅₀ is greater than 1 µm, an increase in the slurry viscosity caused by aggregation of particles can be prevented. In order to adjust the D₅₀ of the active material so as to fall within the above-described range, the operating conditions of a spray-drying granulation process or a tumbling fluidized bed granulation process can be tailored, or the disintegration conditions can be tailored, for example. However, the method for adjusting the D₅₀ is not limited to these.

### A-4. Production of Active Material

A preferred method for producing the active material of the present invention will now be described.

First, a method for producing a core containing the compound A will be described. The compound A can be obtained by, for example, weighing and mixing starting materials, such as a lithium source compound and a manganese source compound, and, if necessary, a nickel source compound, a cobalt source compound, a titanium source compound, and the like; pulverizing the mixture using a wet pulverizer or the like; then performing granulation and calcination, and, if necessary, heat treatment; and subsequently disintegrating the resultant under preferred conditions; and, if necessary, further performing classification. Alternatively, a core containing the compound A can also be obtained by adding a basic substance, such as sodium hydroxide, to an aqueous solution containing a manganese source compound, and, if necessary, a nickel source compound, a cobalt source compound, and a titanium source compound, to precipitate a metal complex hydroxide; then mixing the metal complex hydroxide with a lithium source compound; and calcining the mixture.

The details of the method for producing a core containing the compound A may be the same as those described in the publication WO 2019/044733, for example, and therefore, a description for the details will be omitted. The content of this publication is incorporated herein as a part of the specification of the present application.

Next, a method for producing the compound B will be described. Preferably, the compound B is generated on the surface of the core containing the compound A obtained in the above-described manner. In order to generate the compound B on the surface of the core containing the compound A, a treatment liquid containing a lithium source compound and a niobium source compound can be brought into contact with the compound A. Examples of the lithium source compound used include lithium hydroxide, lithium sulfate, and lithium chloride. Examples of the niobium source compound used include ammonium peroxoniobate. A treatment liquid obtained by dissolving these compounds in water is mixed with the compound A to obtain a slurry, and the slurry is heated at 90°C or higher. Thus, the lithium source compound and ammonium peroxoniobate react with each other in the solution, generating the compound B. Since the compound B tends to be adsorbed to the surface of the core containing the compound A, the compound B can be formed on the surface of the core by drying the slurry. Alternatively, a treatment liquid containing a lithium source compound and ammonium peroxoniobate and heated to 90°C or higher may be sprayed onto the core containing the compound A, or the compound B may be generated from a treatment liquid heated to 90°C or higher and then applied to the surface of the core containing the compound A. After that, disintegration and heat treatment are performed, if necessary.

The amount of treatment liquid used is preferably an amount such that the content of niobium in the active material is, for example, 0.01 mass% or greater, more preferably 0.1 mass% or greater, and even more preferably 0.5 mass% or greater. On the other hand, the content of niobium in the active material is, for example, preferably 20 mass% or less, more preferably 15 mass% or less, and even more preferably 10 mass% or less. There is no particular limitation on the concentration of the treatment liquid.

The compound B can be provided on the surface of the core containing the compound A by drying the above-described slurry. In order to dry the slurry, a spray-drying granulation process or a tumbling fluidized bed granulation process can be used, for example. After that, heat treatment can be performed, if necessary. The heat treatment may be performed in the atmosphere. The drying temperature and the heat treatment temperature can be a relatively low temperature of preferably 25°C to 700°C, more preferably 40°C to 500°C, and even more preferably 60°C to 200°C. The heat treatment time is preferably from 1 to 20 hours, more preferably from 1 to 15 hours, and even more preferably from 1 to 10 hours. In this manner, an active material having a Raman spectral ratio within the above-described range can be successfully obtained. If the heat treatment is performed at an excessively high temperature, it is difficult to obtain an active material having a Raman spectral ratio within the above-described range.

### A-5. Uses of Active Material

The active material of the present invention can preferably be used as a positive electrode active material of a battery.

### B. Electrode Material Mixture

An electrode material mixture of the present invention is a material mixture that contains at least the above-described active material, and may also contain at least one of an electrolyte, a conductive material, and a binder, if necessary. When the active material is used as a positive electrode active material, the electrode material mixture serves as a positive electrode material mixture for forming a positive electrode layer. The active material contained in the electrode material mixture may be the same as that described in the section "A. Active Material" above, and therefore, a description thereof will be omitted.

An example of the electrolyte used in the present invention is a solid electrolyte. Examples of the solid electrolyte include inorganic solid electrolytes, such as a sulfide solid electrolyte, an oxide solid electrolyte, a nitride solid electrolyte, and a halide solid electrolyte, and organic solid electrolytes, such as a polymer electrolyte. The electrolyte used in the present invention is preferably a sulfide solid electrolyte, because the effect of the present invention can be more remarkably exhibited. The sulfide solid electrolyte may be the same as a sulfide solid electrolyte used in ordinary solid-state batteries. The sulfide solid electrolyte may be, for example, a sulfide solid electrolyte containing Li and S and having lithium ion conductivity. The sulfide solid electrolyte may be any of crystalline material, glass ceramic, and glass. The sulfide solid electrolyte may have an argyrodite-type crystal structure. Examples of such sulfide solid electrolyte include compounds represented by Li₂S-P₂S₅, Li₂S-P₂S₅-LiX, where "X" represents one or more elemental halogens, Li₂S-P₂S₅-P₂O₅, Li₂S-Li₃PO₄-P₂S₅, Li₃PS₄, Li₄P₂S₆, Li₁₀GeP₂S₁₂, Li_{3.25}Ge_{0.25}P_{0.75}S₄, Li₇P₃S₁₁, Li_{3.25}P_{0.95}S₄, LiₐPS_{b}X_{c}, where X represents at least one elemental halogen, *a* represents a number from 3.0 to 6.0, b represents a number from 3.5 to 4.8, and c represents a number from 0.1 to 3.0. Other examples of the sulfide solid electrolytes include those disclosed in WO 2013/099834 and WO 2015/001818.

As the active material contained in the electrode material mixture, the active material of the present invention may be used alone or in a combination with another active material. Examples of the other active material include active materials containing known lithium-transition metal complex oxides. The content of the active material of the present invention in the electrode material mixture may be, for example, 20 mass% or greater, 30 mass% or greater, or 40 mass% or greater. On the other hand, the content of the active material of the present invention may be, for example, 70 mass% or less, or 60 mass% or less.

### C. Battery

The battery of the present invention includes a positive electrode layer containing a positive electrode active material, a negative electrode layer containing a negative electrode active material, and a solid electrolyte layer containing a solid electrolyte, and the positive electrode active material is preferably the above-described active material. The battery can be produced by, for example, stacking three layers, specifically, a positive electrode layer produced as described above, a solid electrolyte layer, and a negative electrode layer, and compression-molding the stack.

In view of exhibiting the desired effect even more remarkably, the battery of the present invention preferably has an interface where the positive electrode active material and the solid electrolyte are in contact with each other. The wording "the positive electrode active material and the solid electrolyte are in contact with each other" here encompasses both the contact between the positive electrode active material and the solid electrolyte contained in the positive electrode layer and the contact between the positive electrode active material contained in the positive electrode layer and the solid electrolyte contained in the solid electrolyte layer.

The battery of the present invention can be a solid-state battery, in particular, a lithium solid-state battery. The lithium solid-state battery may be a primary battery or a secondary battery, and preferably a lithium secondary battery. The term "solid-state battery" encompasses a solid-state battery that does not contain any liquid substance or gel substance as the electrolyte, and also a battery that contains a liquid substance or a gel substance as the electrolyte in an amount of, for example, 50 mass% or less, 30 mass% or less, or 10 mass% or less.

The negative electrode active material used in the negative electrode layer may be the same as a negative electrode active material used in ordinary lithium batteries. Specific examples of the negative electrode active material used include materials that intercalate and deintercalate lithium ions, including known materials such as carbon materials, silicon and silicon oxide-based compounds such as Si-O, tin compounds and lithium titanate. Examples of the carbon materials include: those obtained by sintering an organic high molecular compound such as polyacrylonitrile, a phenolic resin, a phenolic novolak resin, and cellulose; and artificial graphite and natural graphite. The negative electrode layer can be produced in the same manner as for the positive electrode layer, except that such a negative electrode active material is used.

### Examples

Hereinafter, the present invention will be described in greater detail by way of examples. However, the scope of the present invention is not limited to the examples below. Unless otherwise specified, "%" means "mass%".

### Example 1

A lithium manganese-containing complex oxide was obtained using the same method as the method disclosed in Example 1 of WO 2019/044733, except that an Al starting material was not used. It was confirmed by XRD that the lithium manganese-containing complex oxide was a spinel-type lithium manganese-containing complex oxide The spinel-type lithium manganese-containing complex oxide, or compound A, was subjected to chemical analysis, and the results were as follows: Li: 4.2%, Mn: 41.6%, Ni: 13.5%, and Ti: 5.1%. The same holds true for other examples and a comparative example below.

On the surface of the core containing the compound A obtained in the above-described manner, a compound B was generated in the following manner.

6.4 g of ammonium peroxoniobate was dissolved in 450 mL of an aqueous lithium hydroxide solution having a lithium ion concentration of 11.4 g/L to obtain a mixed aqueous solution. 100 g of the core obtained above was added to the mixed aqueous solution to obtain a slurry. The slurry was heated to 90°C or higher and kept for 10 minutes. By thus heating at 90°C or higher, a Li-Nb-O compound, which tends to be adsorbed to the surface of the core, was generated on the surface of the core. The liquid was decanted, and then, washing was performed twice with 900 mL of a 0.14 mol/L lithium sulfate solution. After drying at 120°C, a heat treatment was performed in the atmosphere at 200°C for 2 hours, thereby obtaining a target active material. The particle size D₅₀, on a volume basis, of the obtained active material was 3.8 µm.

The percentage of niobium in the active material as measured by ICP atomic emission spectroscopy is shown in Table 1 below.

### Example 2

An active material was obtained in the same manner as in Example 1, except that the amount of ammonium peroxoniobate used to generate the compound B was changed to 8.5 g. The particle size D₅₀, on a volume basis, of the obtained active material was 3.8 µm.

The percentage of niobium in the active material as measured by ICP atomic emission spectroscopy is shown in Table 1 below.

### Example 3

An active material was obtained in the same manner as in Example 1, except that the amount of ammonium peroxoniobate used to generate the compound B was changed to 17.0 g. The particle size D₅₀, on a volume basis, of the obtained active material was 3.8 µm.

The percentage of niobium in the active material as measured by ICP atomic emission spectroscopy is shown in Table 1 below.

### Example 4

An active material was obtained in the same manner as in Example 1, except that the amount of ammonium peroxoniobate used to generate the compound B was changed to 25.5 g. The particle size D₅₀, on a volume basis, of the obtained active material was 3.8 µm.

The percentage of niobium in the active material as measured by ICP atomic emission spectroscopy is shown in Table 1 below.

### Example 5

An active material was obtained in the same manner as in Example 1, except that the amount of ammonium peroxoniobate used to generate the compound B was changed to 42.5 g. The particle size D₅₀, on a volume basis, of the obtained active material was 3.6 µm.

The percentage of niobium in the active material as measured by ICP atomic emission spectroscopy is shown in Table 1 below.

### Comparative Example 1

An active material was obtained in the same manner as in Example 1, except that the compound B was not generated on the surface of particles of the compound A. The particle size D₅₀ of the active material was 4.6 µm.

### Evaluation 1

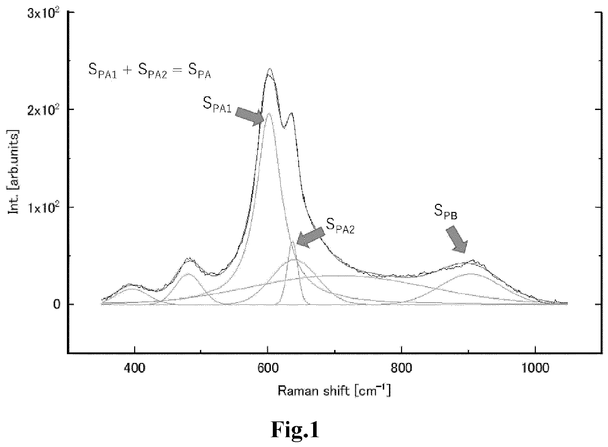

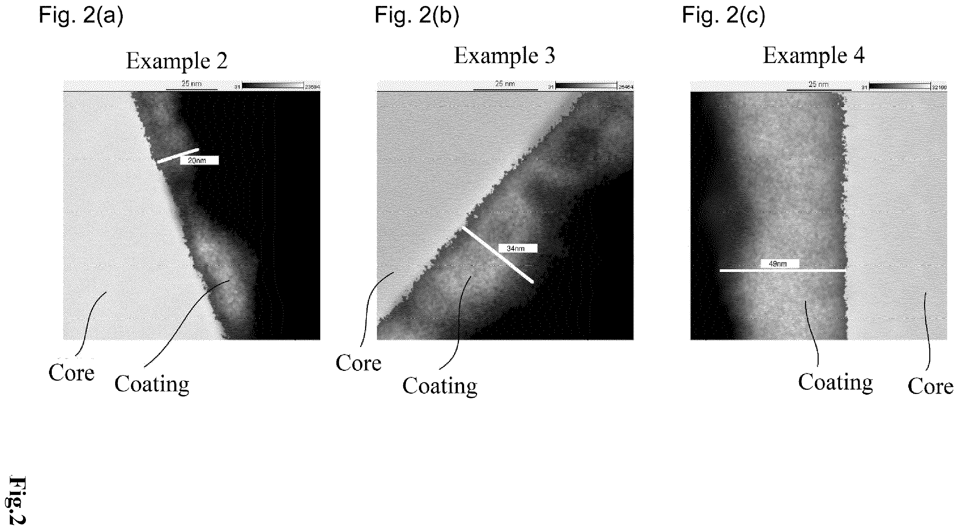

The active materials obtained in Examples and Comparative Example were analyzed by Raman spectroscopy in the method described below to obtain Raman spectra, and the area of a peak assigned to the compound A, S_{PA}, and the area of a peak assigned to the compound B, S_{PB}, were determined. Table 1 below shows the results. Fig. 1 shows the Raman spectrum for the active material of Example 4 and the results of peak separation thereof. Moreover, STEM images of the active materials obtained in Examples 2 to 4 were captured. Figs. 2(a) to 2(c) show the captured images.

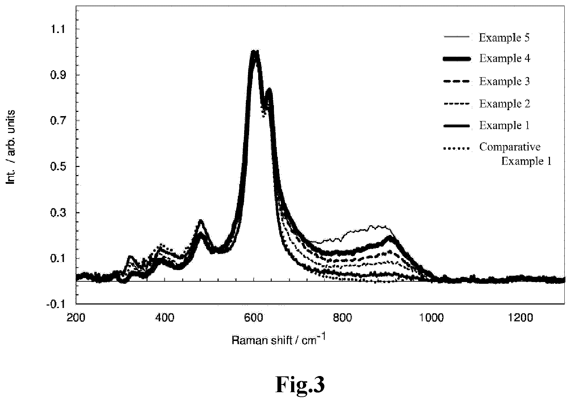

Furthermore, Fig. 3 shows the Raman spectra for the active materials of the examples including Example 4 and the comparative example.

### Method of Obtaining Raman Spectrum

### Sample Preparation

For obtaining a Raman spectrum of a powder sample, a lower level of the unevenness of the surface of the sample and a higher density of the particles are preferable for the following reason: in such cases, more particles can be present in a space where excitation light and Raman scattered light are focused on, so that a high Raman light intensity can be obtained by a smaller excitation power of a laser. For this reason, the active materials obtained in Examples and Comparative Example were each pressed by applying a pressure of 1 ton using a Mini-Pellet Press and a Φ7 mm pellet-forming die (both manufactured by Specac Ltd.), and thus formed into a pellet.

### Conditions for Analysis

- Apparatus: LabRAM HR Evolution (manufactured by HORIBA. Ltd.)
- Excitation wavelength: 325 nm
- Excitation power: 0.6 mW
- Detector: Syncerity OE
- Decay filter: 10%
- Grating: 1200 gr/mm
- Confocal hole: 100 µm
- Exposure time: 40 sec
- Objective lens: ×40/VIS
- Mapping area: 30 µm × 9 µm
- Measurement interval: 2 µm
- Number of times of integration: 1

Wavenumber calibration was performed by analyzing Si as a standard sample and making an adjustment such that the main peak was at 520.0cm⁻¹.

Mapping analysis was performed under the above-described conditions, and then all the spectra in the mapping area were averaged to obtain a main spectrum. The S/N ratio of the spectra may be so poor that it is difficult to judge whether a peak is derived from a sample or from noise; in such a case, the number of points to be analyzed may be increased, and the spectra obtained may be averaged. Furthermore, a peak due to cosmic rays may be included in a spectrum. It is possible to judge whether or not a peak is due to cosmic rays; if this peak does not appear at the relevant wavenumber with good reproducibility in repeated analyses, this peak can be judged to be due to cosmic rays.

The excitation wavelength of the laser was 325 nm. The reason for this is as follows: in general, the shorter the excitation wavelength, the shallower the depth of light penetration into a substance, and as a result, a peak derived from the compound B coating the surface of the compound A is easily observed. Actually, the inventors of the present invention analyzed the sample of Example 1 with an excitation wavelength of 532 nm and confirmed that no peak derived from the compound B was exhibited.

### Peak Analysis

Peak fitting was performed on the peaks in the Raman spectra using a fitting program "Peak Analyzer" in a piece of graphing software "OriginPro 2019" available from OriginLab Corporation. Parameters, the wavenumber, full width at half maximum, and area, of each peak were obtained by the peak fitting. Before the fitting, baseline correction was performed by subtracting a baseline from each spectrum in advance. The baseline was determined by creating a fifth-degree polynomial passing through four points at 180 cm⁻¹, 300 cm⁻¹, 1125 cm⁻¹, and 1425 cm⁻¹, in a range of 350 to 1500 cm⁻¹. Then, the baseline was subtracted from the measured spectrum. The function used for the fitting was a Vogit function for peaks in a range of 540 to 650 cm⁻¹, and a Gaussian function for the other peaks.

### Calculation of Peak Areas S_{PA} and S_{PB}

The area of a peak assigned to the compound A having a peak top in a wavenumber range of 540 to 650 cm⁻¹ was denoted by S_{PA}, and the area of a peak assigned to the compound B was denoted by S_{PB}. The peak area ratio between S_{PA} and S_{PB} was denoted by S_{PA}/S_{PB}.

### Evaluation 2

Solid-state batteries were produced in the following manner using the respective active materials obtained in Examples and Comparative Example as positive electrode active materials. For each of the produced solid-state batteries, the discharge capacity was measured in the following manner. Table 1 below shows the results.

### Production of Solid-State Batteries and Measurement of Discharge Capacity

The active materials produced in Examples and Comparative Example were used as positive electrode active materials, a graphite (Gr) powder was used as a negative electrode active material, and a sulfide solid electrolyte having an argyrodite-type crystal structure was used as a solid electrolyte powder.

A positive electrode material mixture powder was prepared by mixing the positive electrode active material, the solid electrolyte powder, and a conductive material (carbon-based material) powder in a ratio of 60% : 30% : 10% in a mortar.

A negative electrode material mixture powder was prepared by mixing the graphite (Gr) powder and the solid electrolyte powder in a ratio of 50% : 50% in a mortar.

First, 50 mg of the solid electrolyte powder was filled into an insulated cylinder (diameter: 10.5 mm) for a sealed cell, and uniaxially molded at 184 MPa. Then, 13 mg of the positive electrode material mixture powder was filled, and 10 mg of the negative electrode material mixture powder was filled to the opposite side, followed by uniaxial molding at 551 MPa and fastening with a pressurizing screw. Thus, a solid-state battery (solid-state lithium secondary battery) including a positive electrode layer, a negative electrode layer, and a solid electrolyte layer was obtained.

The obtained solid-state battery was subjected to constant-current charging at 0.1 C to a charge cut-off voltage of 5.0 V in the first cycle. Then, constant-voltage charging at a charging voltage of 5.0 V was performed until the current value reached 0.01 C. Next, constant-current discharging at 0.1 C was performed to a discharge cut-off voltage of 3.0 V The capacity obtained through the constant-current discharging to 3.0 V was used as the discharge capacity.

**Table 1**

| | Active material | | Solid-state battery |
|---|---|---|---|
| | Percentage of Nb (%) | Raman spectral ratio S_{PB}/S_{PA} | Discharge capacity (mAh/g) |
| Ex. 1 | 1.2 | 0.04 | 126 |
| Ex. 2 | 2.0 | 0.13 | 121 |
| Ex. 3 | 3.0 | 0.18 | 122 |
| Ex. 4 | 4.2 | 0.23 | 111 |
| Ex. 5 | 5.1 | 0.26 | 100 |
| Com. Ex. 1 | 0.0 | 0.00 | 42 |

As is clear from the results shown in Table 1, it was found that the solid-state batteries including the active materials obtained in Examples, respectively, as the positive electrode active material had high discharge capacities, compared with the solid-state battery including the active material of Comparative Example.

As shown in Fig. 1, in the Raman spectrum of the active material of Example 4, a peak assigned to the compound A and a peak assigned to the compound B were exhibited. The peaks assigned to the compound A in the wavenumber range of 540 to 650 cm⁻¹ were exhibited in an overlapping state. Fig. 1 also shows the results of peak separation of the plurality of overlapping peaks. Of the two peaks obtained by the peak separation, the peak on the lower wavenumber side was assigned to vibrations between a transition element and elemental oxygen, in a one-to-one relationship, in the compound A. The peak on the higher wavenumber side was assigned to overall vibrations between a transition element and all the elemental oxygen atoms located around the transition element. The sum of the area S_{PA1} of the peak on the lower wavenumber side and the area S_{PA2} of the peak on the higher wavenumber side, S_{PA1} + S_{PA2}, is the area S_{PA} of the peak assigned to the compound A.

As shown in Figs. 2(a) to 2(c), it was confirmed that, in each of the active materials of Examples 2 to 4, coating containing the compound B was formed on the surface of the core containing the compound A.

### Industrial Applicability

According to the present invention, provided is an active material capable of reducing the interface resistance between the active material and a solid electrolyte to thereby improve the capacity of a battery.

## Claims

1. An active material comprising:
a compound A containing elemental lithium (Li), an element M, and elemental oxygen (O), where the element M represents one or more elements selected from elemental nickel (Ni), elemental cobalt (Co), and elemental manganese (Mn); and
a compound B containing elemental lithium (Li), elemental niobium (Nb), and elemental oxygen (O),
wherein, in a Raman spectrum obtained by Raman spectroscopy on the active material, a ratio between S_{PA} and S_{PB}, S_{PB}/S_{PA}, satisfies 0 < S_{PB}/S_{PA} ≤ 1.2, wherein S_{PA} represents an area of a peak assigned to the compound A in a range of 540 to 650 cm⁻¹, and S_{PB} represents an area of a peak assigned to the compound B.

2. The active material according to claim 1, wherein the compound A is one of a spinel-type complex oxide and a layered rock salt-type complex oxide.

3. The active material according to claim 1 or 2, containing elemental niobium (Nb) in an amount of 0.1 to 20 mass%.

4. The active material according to any one of claims 1 to 3, wherein the compound B is present on at least a portion of a surface of a core containing the compound A.

5. An electrode material mixture comprising the active material according to any one of claims 1 to 4 and a solid electrolyte.

6. A battery comprising a positive electrode layer containing
a positive electrode active material,
a negative electrode layer containing a negative electrode active material, and
a solid electrolyte layer containing a solid electrolyte,
wherein the positive electrode active material is the active material according to any one of claims 1 to 4.
